# FASCICULE DE BREVET EUROPEEN

(11) **EP 1 430 648 B1**
(45) Date de publication et mention de la délivrance du brevet: **03.08.2005**
(21) Numéro de dépôt: 02783148.6
(22) Date de dépôt: 05.09.2002
(51) Int. Cl.: H04L 12/18, H04N 5/00

(54) **PROCEDE ET DISPOSITIF DE RECEPTION DE CONTENUS DIFFUSES**
VERFAHREN UND VORRICHTUNG ZUM EMPFANG VON RUNDSENDEDATEN
METHOD AND DEVICE FOR RECEIVING BROADCAST CONTENT

(30) Priorité: 18.09.2001 FR 0112070
(43) Date de publication de la demande: 23.06.2004
(73) Titulaire: FRANCE TELECOM, 75015 Paris (FR)
(72) Inventeur: BERTIN, Christian, F-35000 Rennes (FR)
(86) Numéro de dépôt international: PCT/FR2002/003026
(87) Numéro de publication internationale: WO 2003/026206

(56) Documents cités:
- FR-A- 2 763 148
- HANDLEY M ET AL: "SDP: Session Description Protocol" IETF RFC 2327, avril 1998 (1998-04), XP002101463

## Description

La présente invention concerne un procédé de réception, par un terminal, de contenus diffusés par une pluralité de canaux de diffusion, à travers un réseau informatique.

De nombreuses chaînes de télévision diffusent leurs programmes à partir d'ùne source de diffusion, à travers une hiérarchie de réémetteurs locaux couvrant une zone géographique donnée. Chaque réémetteur reçoit un signal audiovisuel, véhiculant le programme en cours de diffusion, et le retransmet vers d'autres réémetteurs, afin de l'acheminer de la source jusqu'aux récepteurs. Un réémetteur peut provisoirement intercepter le programme reçu et, au lieu de le retransmettre, émettre un autre programme. Une telle opération, dite de "décrochage", est utilisée par certaines chaînes nationales, ne disposant généralement que d'un seul canal de diffusion, pour diffuser des programmes régionaux, entre deux programmes nationaux. Pendant les périodes de décrochage, les récepteurs d'une région donnée ne peuvent recevoir que le programme de cette région, à l'exclusion des autres programmes régionaux.

Certaines chaînes de télévision diffusent également à travers l'Internet des programmes, plus couramment appelés "contenus", en utilisant généralement une méthode de diffusion dite "multicast". Cette méthode consiste à émettre à travers l'Internet, à partir d'une source S, des paquets de données IP véhiculant le contenu à diffuser, en un seul envoi. Ces paquets IP sont ensuite dupliqués par des "routeurs", c'est-à-dire des noeuds du réseau, et acheminés à travers l'Internet jusqu'aux terminaux récepteurs. Pour recevoir un contenu, chaque terminal récepteur doit au préalable récupérer un fichier descriptif SDP (Session Description Protocol) associé à la source S, par exemple par téléchargement depuis un site WEB. La structure du fichier SDP, définie par l'IETF (Internet Engineering Task Force), est décrite dans le document RFC2327. Ce fichier véhicule les informations requises pour permettre aux terminaux récepteurs de recevoir les contenus multimédias diffusés par la source S. A chaque source S correspond un fichier SDP général, contenant toutes les informations requises pour se mettre en réception de cette source S, quel que soit le contenu diffusé par celle-ci. En outre, à chaque contenu diffusé (émission TV, film, conférence, etc.) correspond un fichier SDP spécifique contenant toutes les informations nécessaires pour recevoir ce contenu particulier. Le fichier SDP général de la source S est valable quel que soit le contenu diffusé par celle-ci, alors que le fichier SDP d'un contenu spécifique n'est valable que pour la diffusion de ce contenu. Lorsqu'un terminal souhaite recevoir un contenu multimédia diffusé par la source S, il envoie une requête d'acquisition de ce contenu en direction de la source S, à travers l'Internet, en utilisant le protocole IGMP (Internet Group Management Protocol). Le premier routeur, qui reçoit cette requête alors qu'il reçoit déjà les paquets IP diffusés par la source S, se charge de dupliquer les paquets IP puis les achemine vers le terminal ou vers un autre routeur plus proche du terminal. La technique multicast, du fait qu'elle consiste à émettre le contenu en un seul envoi à partir de la source S, est peu gourmande en bande passante. Une même chaîne pourrait donc diffuser simultanément différents contenus, à travers différents canaux de diffusion, sans augmenter de façon rédhibitoire sa consommation en bande passante. Toutefois, pour se mettre en réception de ces différents canaux, les terminaux récepteurs devraient récupérer autant de fichiers SDP qu'il y a de canaux à recevoir et faire le lien par eux-mêmes entre ces différents canaux.

Le document FR 2 763 148 A décrit un système pour fournir de contenu diffusé de multiples programmes spécifiques à différents réseaux et canaux en même temps que les informations de programmes, EPG.

Le problème technique posé par la présente invention consiste donc à proposer un procédé de réception, par un terminal, d'au moins deux canaux de diffusion, qui permettent au terminal de changer de canal de façon simple.

A cet effet, l'invention concerne un procédé de réception, par un terminal, de contenus diffusés à travers un réseau informatique par une pluralité de canaux de diffusion formant un groupement de canaux reliés entre eux suivant une organisation donnée, dans lequel on associe à chaque canal de diffusion un canal de signalisation véhiculant des informations pour acquérir ledit canal de diffusion associé,
- le terminal acquiert un premier canal de signalisation associé à un premier canal de diffusion et, à partir de ce premier canal de signalisation, se met en réception du premier canal de diffusion, et
- pour basculer du premier canal de diffusion sur un second canal de diffusion relié au premier canal de diffusion, le terminal acquiert un second canal de signalisation, associé au second canal de diffusion, à partir du premier canal de signalisation, et, à partir du second canal de signalisation, se met en réception du second canal de diffusion.

Le canal de signalisation associé à chaque canal de diffusion véhicule toutes les informations utiles pour permettre au terminal d'acquérir ce canal de diffusion. Ainsi, pour basculer sur un canal de diffusion donné, le terminal acquiert au préalable le canal de signalisation associé. Dans l'art antérieur, les canaux de diffusion, utilisés exclusivement pour véhiculer des contenus diffusés, étaient indépendants les uns des autres. L'invention consiste donc à relier les canaux de diffusion par l'intermédiaire d'un canal de signalisation lequel permet au terminal de passer d'un canal de diffusion à l'autre.

Avantageusement, pour basculer du second canal de diffusion sur le premier canal de diffusion, le terminal acquiert le canal de signalisation associé au premier canal de diffusion, à partir du canal de signalisation associé au second canal de diffusion. Ainsi, après avoir basculé du premier sur le second canal de diffusion, le terminal peut revenir sur le premier canal de diffusion par le biais du canal de signalisation associé au second canal de diffusion.

De préférence encore, le canal de signalisation associé à l'un des canaux de diffusion indique au terminal si les deux canaux de diffusion diffusent en simultané ou en alternance. Lorsque le terminal est en réception d'un canal de diffusion donné, il sait s'il peut changer de canal pendant la diffusion du contenu à travers le canal sur lequel il se trouve ou s'il doit attendre la fin de la diffusion en cours, grâce au canal de signalisation associé.

Avantageusement, le canal de signalisation associé à l'un des canaux de diffusion fournit au terminal une adresse informatique du canal de signalisation associé à l'autre canal de diffusion. Grâce à cette adresse, le terminal peut récupérer le canal de signalisation correspondant.

Le canal de signalisation associé à l'un des canaux de diffusion peut fournir au terminal une indication de début de diffusion à travers l'autre canal de diffusion et/ou une indication de fin de diffusion à travers l'autre canal de diffusion. Grâce à cela, lorsque le terminal est en réception de l'un des deux canaux de diffusion, il n'a pas besoin de changer de canal de diffusion pour savoir si l'autre canal diffuse un contenu. Cette information lui est directement fournie par le canal de signalisation associé au canal de diffusion sur lequel il se trouve. En outre, à l'aide de l'indication de fin de diffusion, le terminal peut changer automatiquement de canal de diffusion en fin de diffusion, sans intervention de son utilisateur.

Avantageusement, en cours de réception du contenu diffusé par l'un des canaux de diffusion, le terminal signale à un utilisateur une diffusion concomitante à travers l'autre canal de diffusion et change de canal de diffusion sur activation d'une commande de basculement par ledit utilisateur. Lorsque le terminal se trouve sur un canal de diffusion, il peut par exemple afficher un icone signalant une diffusion sur l'autre canal de diffusion. Pour changer de canal de diffusion, il suffit de sélectionner l'icone.

Avantageusement, des contenus étant diffusés par une pluralité des canaux de diffusion respectivement associés à une pluralité de canaux de signalisation et formant un groupement de canaux, chaque canal de signalisation associé à un canal de diffusion fournit au terminal les informations pour acquérir au moins un autre canal de signalisation associé à un autre canal de diffusion du même groupement, de manière à ce que le terminal puisse accéder à tous les canaux de diffusion du groupement.

Dans un mode de réalisation particulier, le groupement de canaux comprenant un canal principal et une pluralité de canaux secondaires, le canal de signalisation associé au canal principal fournit au terminal les informations pour acquérir des canaux de signalisation associés à tous les canaux secondaires.

Avantageusement, le canal de signalisation associé à chaque canal secondaire ne fournit au terminal que les informations pour acquérir le canal de signalisation associé au canal principal, à l'exclusion des adresses informations pour acquérir des canaux de signalisation associés aux autres canaux secondaires.

Dans ce mode de réalisation de l'invention, le terminal peut basculer du canal principal sur n'importe quel autre canal secondaire. En revanche, pour passer d'un canal secondaire à un autre canal secondaire, il doit transiter par le canal principal. Cela permet, d'une part, de ne pas surcharger en informations les canaux de signalisation associés aux canaux secondaires et, par conséquent, de limiter la consommation en bande passante et, d'autre part, de faciliter la mise à jour des canaux de signalisation.

L'invention concerne aussi un terminal pour la mise en oeuvre du procédé défini ci-dessus, comprenant des moyens pour acquérir un canal de signalisation associé à un canal de diffusion et des moyens pour basculer dudit canal de diffusion sur un autre canal de diffusion, à l'aide dudit canal de signalisation.

L'invention sera mieux comprise à l'aide de la description suivante d'un mode de réalisation particulier du procédé de réception et du terminal de l'invention, en référence au dessin annexé sur lequel:
- la figure 1 représente un schéma comprenant une source, avec des canaux de diffusion et de signalisation, un site WEB, l'Internet, un terminal récepteur et différentes étapes du procédé selon le mode de réalisation particulier de l'invention;
- la figure 2 représente un organigramme des étapes principales du procédé de la figure 1 et

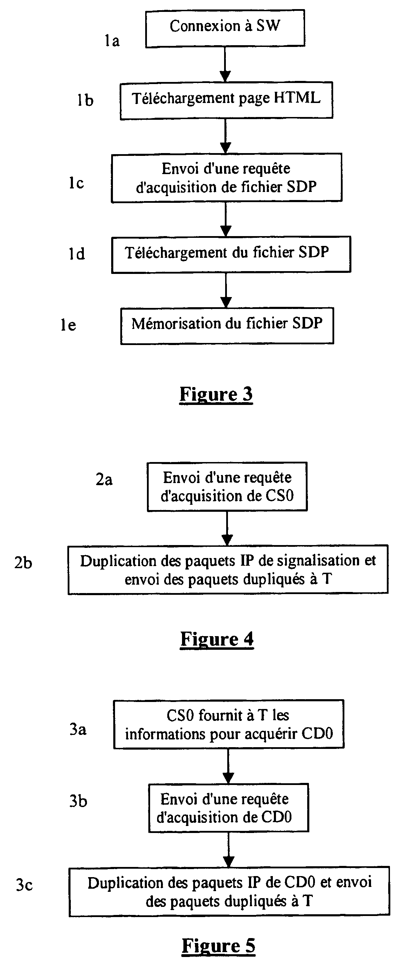

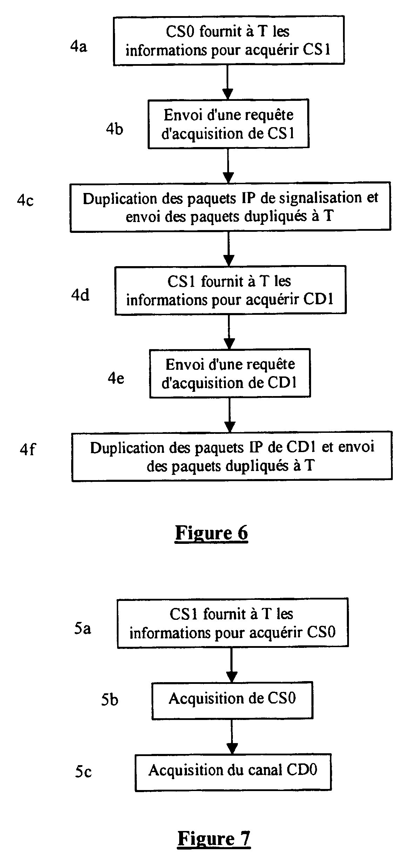

- les figures 3 à 7 représentent des organigrammes des sous-étapes du procédé de la figure 2.

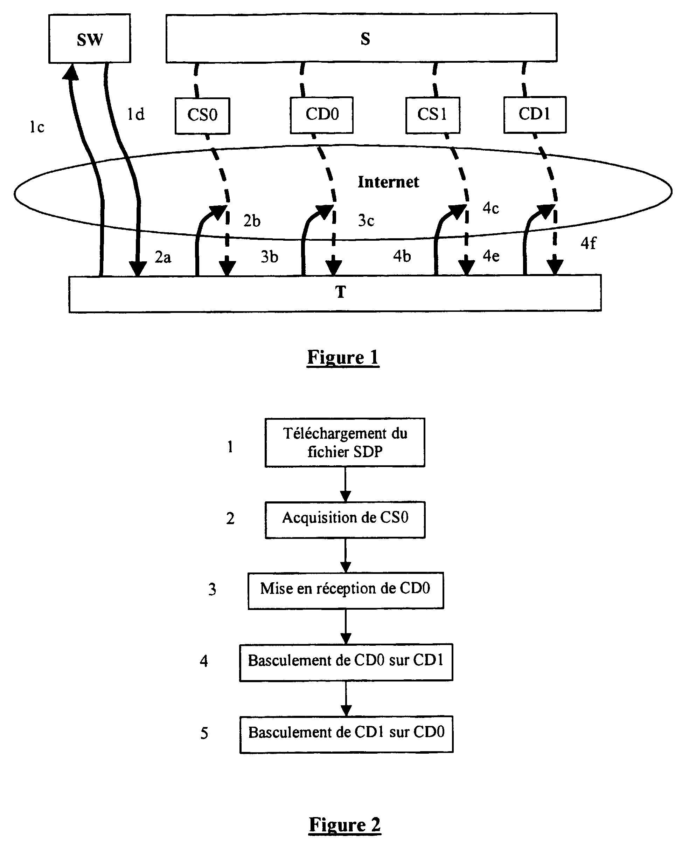

Sur la figure 1, on a représenté une source de diffusion S, un terminal récepteur T, un site WEB SW et l'Internet.

Dans l'exemple particulier de la description, la source S est une chaîne de télévision nationale, dénommée "TV1", hébergée par un serveur audiovisuel de l'Internet et destinée à diffuser en mode multicast des programmes, ou contenus, audiovisuels (émissions télévisées, films vidéos, etc.) nationaux et régionaux, à travers l'Internet, vers des terminaux récepteurs. Le serveur audiovisuel pourrait héberger d'autres sources de diffusion. Le mode multicast consiste à émettre en un seul envoi, à partir de la source S, des paquets de données IP véhiculant le contenu à diffuser. Les paquets de données IP sont ensuite dupliqués par une cascade de routeurs Internet et acheminés à travers l'Internet jusqu'aux terminaux récepteurs. La source S dispose d'un canal principal de diffusion de programmes nationaux CD0 et d'une pluralité de canaux secondaires de diffusion de programmes régionaux CD1, CD2,...CDi,..., CDn. En outre, un canal de signalisation CSi est associé à chaque canal de diffusion CDi et destiné à véhiculer les informations nécessaires pour permettre à un terminal de se mettre en réception de ce canal de diffusion CDi.

Un centre de programmation, non représenté, établit la grille de programmes de la source S et crée des fichiers descriptifs SDP relatifs aux différents canaux de signalisation CSi associés aux canaux de diffusion CDi de la source S.

A titre d'information, on rappelle ici que la structure d'un fichier SDP, telle que définie par l'IETF, est la suivante:
Session description
   v= (protocol version)
   o= (owner/creator and session identifier).
   s= (session name)
   i=* (session information)
   u=* (URI of description)
   e=* (email address)
   p=* (phone number)
   c=* (connection information - not required if included in all media)
   b=* (bandwidth information)
   One or more time descriptions (see below)
   z=* (time zone adjustments)
   k=* (encryption key)
   a=* (zero or more session attribute lines)
   Zero or more media descriptions (see below)
Time description
   t= (time the session is active)
   r=* (zero or more repeat times)
Media description
   m= (media name and transport address)
   i=* (media title)
   c=* (connection information - optional if included at session-level)
   b=* (bandwidth information)
   k=* (encryption key)
   a=* (zero or more media attribute lines)

Les champs marqués du caractère "*" sont optionnels. Pour plus d'informations concernant la structure de données SDP, le lecteur est invité à se reporter au document RFC2327 issu de l'IETF.

Le fichier SDP relatif à un canal de signalisation donné CSi contient un nouveau champ d'informations "m" (pour "média") indiquant que le canal décrit par le fichier SDP est un canal de signalisation et toutes les informations requises pour permettre à un terminal d'acquérir ce canal de signalisation CSi. A titre d'exemple, le fichier SDP relatif au canal de signalisation CS0, associé au canal de diffusion principal CD0, a la structure suivante:
v=0
s=Chaîne TV1 nationale
c=IN IP4 224.2.17.12/127
m=application 49170 RTP/AVP sig

Le champ "c" indique que le canal de signalisation est diffusé à l'adresse Internet multicast IP4 224.2.17.12. Le champ "m" indique que i) le canal décrit est un canal de signalisation ("sig"), ii) ce canal de signalisation utilise le protocole de transmission RTP et iii) le numéro du port d'émission des données de signalisation véhiculées par le canal de signalisation est 49170.

Les fichiers descriptifs SDP, associés à la source S, sont stockés sur le site Web SW à partir duquel ils peuvent être téléchargés par des terminaux récepteurs.

Les terminaux récepteurs comprennent un navigateur WEB leur permettant de naviguer sur l'Internet et une application de réception de canaux de diffusion. Cette application permet à chaque terminal d'acquérir un canal de signalisation associé à un canal de diffusion et de basculer d'un premier canal de diffusion sur un second canal de diffusion en acquérant un premier canal de signalisation (CS0) associé au premier canal de diffusion (CD0) puis, à partir de ce premier canal de signalisation (CS0), un second canal de signalisation (CS1), associé au second canal de diffusion (CD1), et enfin en se mettant en réception du second canal de diffusion (CD1), à partir du premier canal de signalisation (CS0), comme cela sera explicité dans la description du procédé de réception.

Le procédé de réception de l'invention va maintenant être décrit.

La source S émet en mode multicast des paquets de données IP, véhiculant des contenus audiovisuels, à travers le canal principal CD0 et les canaux secondaires CD1, ...CDi,..., CDn, ainsi que des paquets de données IP de signalisation, à travers les canaux de signalisation associés CS0, CS1,..., CSi,..., CSn.

Dans une étape 1, le terminal récepteur T récupère un fichier SDP associé à la source S, en l'espèce le fichier SDP relatif au canal de signalisation CS0 associé au canal de diffusion principal CD0 de la source S. Pour cela, dans une étape 1a, le terminal T se connecte au site WEB SW et, dans une étape 1b, télécharge, depuis ce site, une page HTML contenant des liens vers les canaux de diffusion CDi de la source S et vers des contenus diffusés par la source S. Dans une étape 1c, le terminal récepteur T sélectionne le lien vers le canal de diffusion CD0 et adresse alors au site WEB une requête d'acquisition du fichier SDP relatif au canal de signalisation CS0 associé au canal de diffusion CD0. Sur réception de la requête, dans une étape 1d, le site SW transmet le fichier SDP requis au terminal T à travers l'Internet. Dans une étape 1e, le terminal T mémorise le fichier SDP téléchargé et, ainsi, en dispose pour se mettre en réception du canal de signalisation CS0, soit immédiatement après téléchargement du fichier SDP, soit ultérieurement.

Dans une étape 2, pour se mettre en réception du canal de diffusion principal CD0 de la source S, le terminal T acquiert préalablement le canal de signalisation CS0. Pour cela, dans une étape 2a, il émet à travers l'Internet, par le protocole IGMP ("Internet Group Management Protocol"), une requête d'acquisition du canal de signalisation CS0, à l'aide des informations contenues dans le fichier SDP relatif au canal de signalisation CS0. Le premier routeur Internet qui reçoit cette requête alors qu'il reçoit déjà des paquets de données IP de signalisation diffusés par le canal de signalisation CS0, duplique ces paquets IP et émet les paquets IP dupliqués vers le terminal T, dans une étape 2b. Ces paquets IP de signalisation sont acheminés à travers l'Internet jusqu'au terminal T. Le terminal T se met ainsi en réception du canal de signalisation CS0 associé au canal de diffusion principal CD0.

Chaque canal de signalisation CSi associé à un canal de diffusion CDi véhicule l'identifiant et le type (principal ou secondaire) de ce canal de diffusion CDi. A titre d'exemple, le canal de signalisation CS0 associé au canal de diffusion principal CD0 de la chaîne nationale TV1 véhicule l'identifiant "chaîne TV1 nationale" et indique que le canal de diffusion CD0 est un canal principal. Le canal de signalisation CS1 associé au canal CD1 de diffusion de programmes d'une région A véhicule l'identifiant "chaîne TV1 régionale A" et indique que le canal de diffusion CD1 est un canal secondaire. En outre, chaque canal de signalisation CSi véhicule les informations utiles pour se mettre en réception du canal de diffusion associé CDi, à savoir l'adresse Internet multicast du canal de diffusion CDi, le protocole de transmission utilisé par le canal de diffusion CDi, ici le protocole RTP, et les différents types de données diffusées (audio, vidéo, etc.) avec les numéros des ports d'émission de ces données.

Outre les informations relatives au canal de diffusion principal CD0, le canal de signalisation CS0 véhicule les informations nécessaires pour acquérir le canal de signalisation CSi associé à chacun des canaux de diffusion secondaires CDi, à savoir, pour chaque canal de signalisation CSi:
- l'identifiant du canal de diffusion secondaire associé CDi (chaîne TV1 régionale A);
- l'indication du réseau informatique de diffusion (IN pour Internet);
- l'adresse informatique du canal de signalisation CSi (IP4 224.2.17.13);
- une indication selon laquelle le canal principal CD0 et le canal secondaire CDi diffusent en simultané (sim=1) ou en alternance (sim=0);
- et, éventuellement, une indication temporelle de début de diffusion du canal CDi (t_start=2873397496) et une indication temporelle de fin de diffusion du canal CDi (t_stop=2873404696).

Les informations figurant entre parenthèses sont données à titre d'exemple illustratif et concernent le canal de signalisation CS1 associé au canal CD1 de diffusion de programmes de la région A.

Le canal de signalisation CSi associé à chaque canal de diffusion secondaire CDi contient, outre les informations relatives à ce canal de diffusion CDi, les informations utiles pour acquérir le canal de signalisation CS0 associé au canal de diffusion principal CD0, à savoir l'identifiant du canal principal CD0 (chaîne TV1 nationale), l'indication du réseau informatique de diffusion (In pour Internet) et l'adresse informatique du canal de signalisation associé CS0 (IP4 224.2.17.12), ainsi qu'éventuellement une indication temporelle de fin de diffusion du canal secondaire CDi (par exemple t_stop=2873404696).

Dans une étape 3, par le biais du canal de signalisation CS0, le terminal T se met en réception du canal de diffusion principal CD0. Pour cela, dans une étape 3a, le canal de signalisation CS0 fournit au terminal T les informations requises pour se mettre en réception du canal de diffusion CD0. A l'aide de ces informations, dans une étape 3b, il émet à travers l'Internet, par le protocole IGMP, une requête d'acquisition du canal de diffusion principal CD0, à l'aide des informations contenues dans le canal de signalisation CS0. Dans une étape 3c, le premier routeur Internet qui reçoit cette requête, alors qu'il reçoit déjà les paquets de données IP véhiculant le contenu diffusé par le canal principal CD0, duplique les paquets de données IP et émet les paquets IP dupliqués vers le terminal T. Les paquets IP sont acheminés jusqu'au terminal T à travers l'Internet. Le terminal T se met ainsi en réception du canal de diffusion CD0 et reçoit le contenu diffusé par ce canal CD0.

Dans une étape 4, le terminal bascule du canal de diffusion principal CD0 sur le canal de diffusion secondaire CD1. Pour cela, dans une étape 4a, le canal de signalisation CS0 fournit au terminal T les informations requises pour acquérir le canal de signalisation CS1 associé au canal de diffusion secondaire CD1. A l'aide de ces informations, dans une étape 4b, le terminal T émet à travers l'Internet, par le protocole IGMP, une requête d'acquisition du canal de signalisation CS1 associé au canal de diffusion secondaire CD1. Dans une étape 4c, le premier routeur Internet, qui reçoit cette requête alors qu'il reçoit déjà les paquets de données IP de signalisation diffusés par le canal CS1, duplique les paquets IP de signalisation et les émet vers le terminal T. Les paquets IP de signalisation sont acheminés à travers l'Internet jusqu'au terminal T. Le terminal T se met ainsi en réception du canal de signalisation CS1. Dans une étape 4d, le canal de signalisation CS1 fournit au terminal T toutes les informations utiles pour se mettre en réception du canal de diffusion associé CD1. Dans une étape 4e, à l'aide de ces informations, le terminal T émet à travers l'Internet, par le protocole IGMP, une requête d'acquisition du canal de diffusion secondaire CD1 associé. Dans une étape 4f, le premier routeur Internet qui reçoit cette requête, alors qu'il reçoit déjà les paquets de données IP véhiculant le contenu diffusé par le canal secondaire CD1, duplique les paquets de données IP et les émet les paquets IP dupliqués vers le terminal T. Les paquets IP sont acheminés à travers l'Internet jusqu'au terminal T qui se met ainsi en réception du canal de diffusion secondaire CD1 et reçoit le contenu diffusé par ce canal CD1.

Dans une étape 5, le terminal T bascule du canal secondaire CD1 sur le canal principal CD0. Pour cela, dans une étape 5a, le canal de signalisation CS1, associé au canal de diffusion CD1 sur lequel il se trouve, fournit au terminal T les informations nécessaires pour acquérir CS0, à savoir l'identifiant du canal principal CD0 et l'adresse Internet du canal de signalisation CS0 associé au canal principal CD0. A l'aide de ces informations, dans une étape 5b, le terminal T acquiert le canal de signalisation CS0 puis, dans une étape 5c, à partir du canal de signalisation CS0, il acquiert le canal de diffusion principal CD0, comme précédemment décrit dans les étapes 3a-c.

Lorsque le terminal T est en réception du canal de diffusion principal CD0, le canal de signalisation associé CS0 lui indique éventuellement le début et la fin des diffusions parallèles, c'est-à-dire simultanées, à travers les canaux secondaires CDi. A l'aide de ces indications, dès qu'un canal secondaire diffuse un contenu alors que le canal principal est déjà en cours de diffusion d'un contenu, le terminal T affiche un icone pour signaler à son utilisateur la diffusion parallèle à travers le canal secondaire. L'utilisateur peut ensuite sélectionner l'icone en activant ainsi une commande de basculement sur le canal secondaire. Le terminal T exécute alors l'étape 4 précédemment décrite.

Lorsque le terminal reçoit le contenu diffusé par un canal de diffusion CDi, le canal de signalisation associé CSi lui indique la fin de la diffusion en cours. A l'aide de cette indication, à la fin d'une émission diffusée par le canal sur lequel il se trouve, le terminal pourrait automatiquement basculer sur un autre canal de diffusion CDi qui serait soit un canal défini par défaut, soit un canal préalablement programmé par l'utilisateur. A titre d'exemple, à la fin d'une émission diffusée par un canal secondaire, le terminal pourrait basculer automatiquement sur le canal principal. On pourrait également envisager de permettre à l'utilisateur de programmer un basculement automatique de canal de diffusion: à un instant donné, à la fin de la diffusion d'un contenu spécifique ou au démarrage d'un canal de diffusion secondaire particulier.

On soulignera ici que le canal de signalisation CS0 associé au canal de diffusion principal véhicule les informations nécessaires pour acquérir les canaux de signalisation associés à tous les canaux de diffusion secondaires CDi. En revanche, le canal de signalisation associé à chaque canal de diffusion secondaire CDi ne véhicule que les informations nécessaires pour acquérir le canal de signalisation CS0 associé au canal de diffusion principal CD0, à l'exclusion des informations nécessaires pour acquérir les canaux de signalisation associés aux autres canaux de diffusion secondaires. Ainsi, pour passer d'un canal de diffusion secondaire à un autre canal de diffusion secondaire, le terminal doit passer par le canal de signalisation associé au canal de diffusion principal. Grâce à cela, on limite la quantité d'informations véhiculées à travers les canaux de signalisation associés aux canaux de diffusion secondaires et les problèmes de mises à jour dynamiques de ces canaux.

Dans la description qui précède, les canaux de diffusion de la source S forment un groupement hiérarchisé dans lequel tous les canaux secondaires sont reliés au canal principal.

D'une manière générale, les contenus sont diffusés par une pluralité des canaux de diffusion respectivement associés à une pluralité de canaux de signalisation et formant un groupement de canaux. Chaque canal de signalisation associé à un canal de diffusion fournit au terminal T les informations pour acquérir au moins un autre canal de signalisation associé à un autre canal de diffusion du même groupement, de manière à ce que le terminal T puisse accéder à tous les canaux de diffusion du groupement. On pourrait par exemple envisager un groupement de canaux de diffusion organisé suivant une hiérarchie différente de celle décrite (un canal secondaire pouvant par exemple être le canal principal d'une pluralité de canaux), ou encore un groupement de canaux de diffusion non hiérarchisé (par exemple pour diffuser les prises de vues d'une pluralité de caméras filmant un même événement sous différents angles). Dans le second cas, le canal de signalisation associé à chaque canal de diffusion peut véhiculer toutes les informations utiles pour acquérir les canaux de signalisation associés à tous les autres canaux de diffusion.

Sur la figure 1, le serveur S pourrait être remplacé par une pluralité de serveurs, les différents serveurs se répartissant la charge des différents canaux.

L'invention pourrait s'appliquer à un réseau informatique autre que l'Internet.

## Revendications

1. Procédé de réception, par un terminal (T), de contenus diffusés à travers un réseau informatique par une pluralité de canaux de diffusion (CD0, CD1, ...) formant un groupement de canaux reliés entre eux suivant une organisation donnée, dans lequel on associe à chaque canal de diffusion (CD0, CD1, ...) un canal de signalisation (CS0, CS1, ...) véhiculant des informations pour acquérir ledit canal de diffusion associé (CD0, CD1, ...),
- le terminal (T) acquiert un premier canal de signalisation (CS0) associé à un premier canal de diffusion (CD0) et, à partir de ce premier canal de signalisation (CS0), se met en réception du premier canal de diffusion (CD0), et **caractérisé en ce, que**
- pour basculer du premier canal de diffusion (CD0) sur un second canal de diffusion (CD1) relié au premier canal de diffusion (CD0), le terminal (T) acquiert un second canal de signalisation (CS1), associé au second canal de diffusion (CD1), à partir du premier canal de signalisation (CS0), et, à partir du second canal de signalisation (CS1), se met en réception du second canal de diffusion (CD1).

2. Procédé selon la revendication 1, dans lequel, pour basculer du second canal de diffusion (CD1) sur le premier canal de diffusion (CD0), le terminal (T) acquiert le canal de signalisation (CS0) associé au premier canal de diffusion (CD0), à partir du canal de signalisation (CD1) associé au second canal de diffusion (CD1).

3. Procédé selon l'une des revendications 1 et 2, dans lequel le canal de signalisation (CS0, CS1) associé à l'un des canaux de diffusion (CD0, CD1) indique au terminal (T) si les deux canaux de diffusion (CD0, CD1) diffusent en simultané ou en alternance.

4. Procédé selon l'une des revendications 1 à 3, dans lequel le canal de signalisation (CS0, CS1) associé à l'un des canaux de diffusion (CD0, CD1) fournit au terminal (T) une adresse informatique du canal de signalisation (CS1, CS0) associé à l'autre canal de diffusion (CD1, CD0).

5. Procédé selon l'une des revendications 1 à 4, dans lequel le canal de signalisation (CS0, CS1) associé à l'un des canaux de diffusion (CD0, CD1) fournit au terminal (T) une indication de début de diffusion à travers l'autre canal de diffusion (CD1, CD0).

6. Procédé selon l'une des revendications 1 à 7, dans lequel le canal de signalisation (CS0, CS1) associé à l'un des canaux de diffusion (CD0, CD1) fournit au terminal une indication de fin de diffusion à travers l'autre canal de diffusion (CD1, CD0).

7. Procédé selon la revendication 6, dans lequel, à l'aide de l'indication de fin de diffusion, le terminal (T) change automatiquement de canal de diffusion (CD0, CD1) en fin de diffusion.

8. Procédé selon l'une des revendications 1 à 7, dans lequel, en cours de réception du contenu diffusé par l'un des canaux de diffusion (CD0, CD1), le terminal (T) signale à un utilisateur une diffusion concomitante à travers l'autre canal de diffusion (CD1, CD0) et change de canal de diffusion sur activation d'une commande de basculement par ledit utilisateur.

9. Procédé selon l'une des revendications 1 à 8, dans lequel chaque canal de signalisation fournit au terminal (T) les informations pour acquérir au moins un autre canal de signalisation associé à un autre canal de diffusion dudit groupement de manière à ce que le terminal puisse accéder à tous les canaux de diffusion du groupement.

10. Procédé selon la revendication 9, dans lequel, le groupement de canaux comprenant un canal principal (CD0) et une pluralité de canaux secondaires (CD1,..., CDi,..., CDn), le canal de signalisation associé au canal principal (CD0) fournit au terminal (T) les informations pour acquérir des canaux de signalisation (CS1,..., CSi,..., CSn) associés à tous les canaux secondaires (CD1,..., CDi,..., CDn).

11. Procédé selon la revendication 10, dans lequel le canal de signalisation (CS1,..., CSi,..., CSn) associé à chaque canal secondaire (CD1,..., CDi,..., CDn) ne fournit au terminal (T) que les informations pour acquérir le canal de signalisation (CS0) associé au canal principal (CD0), à l'exclusion des informations pour acquérir les canaux de signalisation (CS1,..., CSi,..., CSn) associés aux autres canaux secondaires (CD1,..., CDi,..., CDn).

12. Procédé selon la revendication 10, dans lequel le canal de signalisation (CS1,..., CSi,..., CSn) associé à chaque canal secondaire (CD1,..., CDi,..., CDn) fournit au terminal (T) les informations pour acquérir le canal de signalisation (CS0) associé au canal principal (CD0) et les informations pour acquérir aux moins un autre canal de signalisation (CS1,..., CSi,..., CSn) associé à un autre canal de diffusion (CD1,..., CDi,..., CDn) du même groupement.

13. Terminal pour la mise en oeuvre de la revendication 1, comprenant des moyens pour acquérir un canal de signalisation associé à un canal de diffusion et **caractérisé par** des moyens pour basculer d'un premier canal de diffusion sur un second canal de diffusion agencés pour acquérir un premier canal de signalisation (CS0) associé au premier canal de diffusion (CD0) puis, à partir de ce premier canal de signalisation (CS0), un second canal de signalisation (CS1), associé au second canal de diffusion (CD1), et enfin pour se mettre en réception du second canal de diffusion (CD1), à partir du second canal de signalisation (CS1).

## Claims

1. A method of reception, by a terminal (T), of content broadcast over a computer network by a plurality of broadcast channels (CD0, CD1, ...) forming a group of channels linked in accordance with a given organization, in which method:
- each broadcast channel (CD0, CD1, ...) is associated with a signaling channel (CS0, CS1, ...) conveying information for acquiring said broadcast channel (CD0, CD1, ...), and
- the terminal (T) acquires a first signaling channel (CS0) associated with a first broadcast channel (CD0) and, from said first signaling channel (CS0), starts to receive the first broadcast channel (CD0),
the method being **characterized in that**:
- in order to switch from the first broadcast channel (CD0) to a second broadcast channel (CD1) linked to the first broadcast channel (CD0), the terminal T acquires a second signaling channel (CS1) associated with a second broadcast channel (CD1) from the first signaling channel (CS0) and, from the second signaling channel (CS1), starts to receive the second broadcast channel (CD1).

2. A method according to claim 1, wherein, to switch from the second broadcast channel (CD1) to the first broadcast channel (CD0), the terminal (T) acquires the signaling channel (CS0) associated with the first broadcast channel (CD0) from the signaling channel (CS1) associated with the second broadcast channel (CD1).

3. A method according to either claim 1 or claim 2, wherein the signal channel (CS0, CS1) associated with one of the broadcast channels (CD0, CD1) indicates to the terminal (T) whether the two broadcast channels (CD0, CD1) are broadcasting simultaneously or alternately.

4. A method according to any one of claims 1 to 3, wherein the signaling channel (CS0, CS1) associated with one of the broadcast channels (CD0, CD1) supplies the terminal (T) with a computer address of the signaling channel (CS1, CS0) associated with the other broadcast channel (CD1, CD0).

5. A method according to any one of claims 1 to 4, wherein the signaling channel (CS0, CS1) associated with one of the broadcast channels (CD0, CD1) supplies the terminal (T) with an indication of the starting of broadcasting via the other broadcast channel (CD1, CD0).

6. A method according to any one of claims 1 to 5, wherein the signaling channel (CS0, CS1) associated with one of the broadcast channels (CD0, CD1) supplies the terminal with an indication of the stopping of broadcasting via the other broadcast channel (CD1, CD0).

7. A method according to claim 6, wherein the terminal (T) uses the indication of stopping of broadcasting to change broadcast channel (CD1, CD0) automatically when broadcasting stops.

8. A method according to any one of claims 1 to 7, wherein, during reception of the content broadcast by one of the broadcast channels (CD0, CD1), the terminal (T) signals to a user concomitant broadcasting via the other broadcast channel (CD1, CD0) and changes broadcast channel in response to a switching command from said user.

9. A method according to any one of claims 1 to 8, wherein each signaling channel supplies the terminal (T) with information for acquiring one or more other signaling channels associated with another broadcast channel of said group so that the terminal can access all the broadcast channels of the group.

10. A method according to claim 9, wherein the group of channels comprises a main channel (CD0) and a plurality of secondary channels (CD1, ..., CDi, ..., CDn) and the signaling channel associated with the main channel (CD0) supplies the terminal (T) with the information to acquire signaling channels (CS1, ..., CSi, ..., CSn) associated with all the secondary channels (CD1, ..., CDi, ..., CDn).

11. A method according to claim 10, wherein the signaling channel (CS1, ..., CSi, ..., CSn) associated with each secondary channel (CD1, ..., CDi, ..., CDn) supplies the terminal (T) with information for acquiring the signaling channel (CS0) associated with the main channel (CD0), to the exclusion of information for the signaling channels (CS1, ..., CSi, ..., CSn) associated with the other secondary channels (CD1, ..., CDi, ..., CDn).

12. A method according to claim 10, wherein the signaling channel (CS1, ..., CSi, ..., CSn) associated with each secondary channel (CD1, ..., CDi, ..., CDn) supplies the terminal (T) with information for acquiring the signaling channel (CS0) associated with the main channel (CD0) and information for acquiring another signaling channel (CS1, ..., CSi, ..., CSn) associated with another broadcast channel (CD1, ..., CDi, ..., CDn) of the same group.

13. A terminal for implementing the method according to claim 1, comprising means for acquiring a signaling channel associated with a broadcast channel and **characterized by** means for switching from a first broadcast channel to a second broadcast channel adapted to acquire a first signaling channel (CS0) associated with the first broadcast channel (CD0) and then, from said first signaling channel (CS0), a second signaling channel (CS1) associated with the second broadcast channel (CD1), and finally to start to receive the second broadcast channel (CD1) from the second signaling channel (CS1).

## Patentansprüche

1. Verfahren, bei dem ein Terminal (T) Inhalte empfängt, die über ein Informatiknetz über mehrere Sendekanäle (CD0, CD1 ...) gesendet werden, die eine Gruppierung unter einander nach einem vorgegebenen Organisationsschema verbundener Kanäle darstellen, wobei jeder Sendekanal (CD0, CD1, ...) mit einem Signalkanal (CS0, CS1 ...) verbunden ist, der Informationen weiterleitet, um den erwähnten verbundenen Sendekanal (CD0, CD1 ...) zu erfassen.
- der Terminal (T) erfasst einen ersten Signalkanal (CS0), der mit einem ersten Sendekanal (CD0) verbunden ist und empfängt von diesem ersten Signalkanal (CS0) aus den ersten Sendekanal (CD0) und **dadurch gekennzeichnet, dass**
- um vom ersten Sendekanal (CD0) auf einen zweiten Sendekanal (CD1), der mit dem ersten Sendekanal (CD0) verbunden ist, umzuschalten, erfasst der Terminal (T) einen zweiten Signalkanal (CS1), der über den ersten Signalkanal (CS0) mit dem zweiten Sendekanal (CD1) verbunden ist und vom zweiten Signalkanal (CS1) aus den zweiten Sendekanal (CD1) empfängt.

2. Verfahren nach Anspruch 1, in dem, um vom zweiten Sendekanal (CD1) auf den ersten Sendekanal (CD0) zu wechseln, der Terminal (T) den Signalkanal (CS0) erfasst, der mit dem ersten Sendekanal (CD0) verbunden ist und dies mit Ausgangspunkt in dem Signalkanal (CD1), der mit dem zweiten Sendekanal (CD1) verbundenen ist.

3. Verfahren nach einem der Ansprüche 1 und 2, in dem der Signalkanal (CS0, CS1), der mit einem der Sendekanäle (CD0, CD1) verbunden ist, dem Terminal (T) anzeigt, ob die beiden Sendekanäle (CD0, CD1) simultan oder alternierend senden.

4. Verfahren nach einem der Ansprüche 1 bis 3, in dem der Signalkanal (CS0, CS1), der mit einem der Sendekanäle (CD0, CD1) verbunden ist, dem Terminal (T) eine Informatikadresse des Signalkanals (CS1, CS0) liefert, der mit dem anderen Sendekanal (CD1, CD0) verbunden ist.

5. Verfahren nach einem der Ansprüche 1 bis 4, in dem der Signalkanal (CS0. CS1), der mit einem der Sendekanäle (CD0, CD1) verbunden ist, dem Terminal (T) den Anfang der Sendung über den anderen Sendekanal (CD1, CD0) anzeigt.

6. Verfahren nach einem der Ansprüche 1 bis 7 in dem der Signalkanal (CS0, CS1), der mit einem der Sendekanäle (CD0, CD1) verbunden ist, dem Terminal das Ende der Sendung über den anderen Sendekanal (CD1, CD0) anzeigt.

7. Verfahren nach Anspruch 6, in dem der Terminal (T) mittels der Anzeige des Sendeschlusses automatisch am Ende der Sendung den Sendekanal (CD0, CD1) wechselt.

8. Verfahren nach einem der Ansprüche 1 bis 7, in dem während des Empfangs des von einem der Sendekanäle (CD0, CD1) gesendeten Inhalts der Terminal (T) einem Nutzer eine gleichzeitige Sendung über den anderen Sendekanal (CD1, CD0) anzeigt und den Sendekanal durch Aktivierung eines Umschaltbefehls durch vorgenannten Nutzer wechselt.

9. Verfahren nach einem der Ansprüche 1 bis 8, in dem jeder Signalkanal dem Terminal (T) Informationen liefert, um mindestens einen anderen Signalkanal zu erfassen, der mit einem anderen Sendekanal der erwähnten Gruppierung so verbunden ist, dass der Terminal Zugang zu allen Sendekanälen der Gruppierung hat.

10. Verfahren nach Anspruch 9, in dem die Gruppierung der Kanäle aus einem Hauptkanal (CD0) und mehreren Sekundärkanälen (CD1, ... CDi, ... CDn) besteht und der mit den Hauptkanal (CD0) verbundene Signalkanal dem Terminal (T) die Informationen liefert, um die mit allen Sekundärkanälen (CD1, ... CDi, ... CDn) verbundenen Signalkanäle (CS1, ... CSi, ..., CSn) zu erfassen.

11. Verfahren nach Anspruch 10, in dem der mit jedem Sekundärkanal (CD1, ... CDi, ... CDn) verbundene Signalkanal (CS1, ... CSi, ..., CSn) dem Terminal (T) nur die Informationen übermittelt, die für die Erfassung des mit dem Hauptkanal (CD0) verbundenen Signalkanals (CS0) erforderlich sind und die Informationen zur Erfassung der Signalkanäle (CS1,... CSi, ..., CSn), die mit den anderen Sekundärkanälen (CD1, ... CDi, ... CDn) verbunden sind, ausschließt.

12. Verfahren gemäß Anspruch 10, in dem der mit jedem Sekundärkanal (CD1, ... CDi, ... CDn) verbundene Signalkanal (CS1, ... CSi, ..., CSn) dem Terminal (T) Informationen zur Erfassung des mit dem Hauptkanal (CD0) verbundenen Signalkanals (CS0) und Informationen zur Erfassung mindestens eines weiteren mit einem anderen Sendekanal (CD1, ... CDi, ... CDn) verbundenen Signalkanals (CS1, ... CSi, ..., CSn) der gleichen Gruppierung liefert.

13. Terminal zur Umsetzung von Anspruch 1, bestehend aus Mitteln zur Erfassung eines mit einem Sendekanal verbundenen Signalkanals, und **gekennzeichnet durch** Mittel zur Umschaltung von einem ersten Sendekanal auf einen zweiten Sendekanal mit einer derartigen Anordnung, dass ein erster Signalkanal (CS0) erfasst wird, der mit einem ersten Sendekanal (CD0) verbunden ist und dann, von diesem ersten Signalkanal (CS0) aus ein zweiter Signalkanal (CS1), der mit einem zweiten Sendekanal (CD1) verbunden ist und schließlich vom zweiten Signalkanal (CS1) aus einen zweiten Sendekanal (CD1) empfangen kann.
